(19) Europäisches Patentamt
European Patent Office
Office européen des brevets

(11) EP 3 438 593 A1

(12) # EUROPEAN PATENT APPLICATION
published in accordance with Art. 153(4) EPC

(43) Date of publication:
**06.02.2019 Bulletin 2019/06**

(21) Application number: **17774808.4**

(22) Date of filing: **24.03.2017**

(51) Int Cl.:
***F28F 1/32*** *(2006.01)* ***F25B 39/02*** *(2006.01)*
***F28F 13/18*** *(2006.01)*

(86) International application number:
**PCT/JP2017/012153**

(87) International publication number:
**WO 2017/170271 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2016 JP 2016071529**

(71) Applicant: **UACJ Corporation**
**Tokyo 100-0004 (JP)**

(72) Inventors:
- **SEKO Yoshiya**
  **Tokyo 100-0004 (JP)**
- **TOYAMA Tomoaki**
  **Tokyo 100-0004 (JP)**
- **UEDA Kaoru**
  **Tokyo 100-0004 (JP)**

(74) Representative: **Kramer Barske Schmidtchen Patentanwälte PartG mbB**
**European Patent Attorneys**
**Landsberger Strasse 300**
**80687 München (DE)**

(54) **FIN MATERIAL FOR HEAT EXCHANGER, AND HEAT EXCHANGER**

(57) To provide a heat-exchanger fin material that excels in hydrophilicity, designability, and color fading resistance, has a hydrophilic colored coating obtained by a single coating step, and makes it possible to prevent reduction of moldability, and a heat exchanger using this fin material. The heat-exchanger fin material includes a substrate (2) composed of aluminum, a coating film (3) formed thereon and composed of a one-layered or two or more-layered coating, and the heat exchanger is formed using such a fin material. The coating film (3) has a hydrophilic colored coating (31) on its outermost surface, and the hydrophilic colored coating (31) contains an acrylic-modified epoxy resin (A), a melamine resin (B), a perfluoroalkyl group-containing alcohol resin (C), and a pigment (D). The content of the pigment (D) in the hydrophilic colored coating (31) is 1 to 80 mg/$m^2$. The water-contact angle of the hydrophilic colored coating (31) is 20° or less. The elution ratio of the hydrophilic colored coating into running water is 1 mass% or less after an immersion test in which the heat-exchanger fin material is immersed in running water with a flow rate of 5L/hour for 24 hours.

FIG. 1

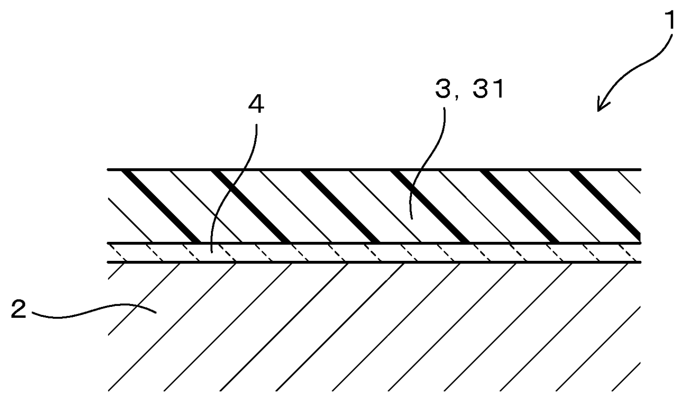


EP 3 438 593 A1

## Description

### TECHNICAL FIELD

The present invention relates to a fin material for use in a heat exchanger and to a heat exchanger that uses the same.

Recently in heat exchangers for air conditioner, an improvement in heat exchange efficiency and downsizing have been demanded, and a design to reduce the fin interval as narrow as possible is introduced. In such a design, condensed water adhered to the surface of each fin in an outdoor unit during cooling operation tends to remain between the fins in a bridge state. Such tendency may cause increase in ventilation resistance, i.e. an air flow resistance between the fins, and thus reduction of the heat exchange efficiency may be caused.

As a solution, a technique is adopted, in which a hydrophilic colored coating is formed on the surface of a fin so as to form a water film with uniform and small thickness from condensed water to thereby improve drainage, restrain increase in ventilation resistance due to the condensed water, and maintain the heat exchange performance. As a material for forming the hydrophilic colored coating, for example, an inorganic coating containing silica such as water glass or colloidal silica or an organic coating containing a hydrophilic polymer such as cellulose resin or acrylic-based resins, which has been subjected to chromate treatment, can be proposed.

Meanwhile, recent air conditioners are required to have designability in its fins to visually exert effects such as refreshing feeling and luxurious appearance, and colored fin materials have been proposed. Coloring methods include a technique in which a pigment is added to the coating, however, such a hydrophilic colored coating as described above tends to cause the coating component to elute into the water, and thus the pigment is dissolved in the drain water together with the coating component when the condensed water is adhered. As a result, there is a risk that the fin may lose color, and the drain water may be contaminated.

In Patent Documents 1 and 2, as most of conventional designable fin materials, plural-layered fin materials are proposed, the plural-layered fin materials being obtained by adding the pigment to a coating composed of a corrosion resistant resin such as an epoxy resin and a urethane resin with low elution into water so as to form a corrosion resistant coating as a base coating, and coating the corrosion resistant coating with such a hydrophilic colored coating as described above. In Patent Document 3, a hydrophilic colored coating that contains a hydrophilic resin, a hydrophilic inorganic material and specific pigment particles, and is specified in a Lab color specification system is proposed.

### PRIOR ART LITERATURE

#### Patent Documents

| | |
|---|---|
| Patent Document 1 | JP-A-2003-231977 |
| Patent Document 2 | JP-A-2006-321965 |
| Patent Document 3 | JP-A-2009-214001 |

### SUMMARY OF THE INVENTION

#### PROBLEMS TO BE SOLVED BY THE INVENTION

However, aluminum fin materials as in Patent Documents 1 and 2 require a plurality of coating steps, which deteriorates coating workability, increases coating cost, and decreases mass productivity. In addition, an aluminum fin material using the hydrophilic colored coating in Patent Document 3 contains in the coating an inorganic material with high hardness, such as an alkali metal silicate or alumina, and thus when an aluminum-alloy sheet is processed into a fin material, mold abrasion is so large because of the high coating film hardness, and problematically cracks may easily occur in the fin material.

The present invention has been made in view of the above-mentioned background, and it is intended to provide a heat-exchanger fin material that excels in hydrophilicity, designability, and color fading resistance, has a hydrophilic colored coating that can be obtained by a single coating step, and enables to prevent deterioration of moldability, and a heat exchanger that uses the same.

#### MEANS FOR SOLVING THE PROBLEMS

One aspect of the present invention is a heat-exchanger fin material including:

a substrate composed of aluminum; and
a coating film formed on the substrate and composed of a one-layered or two or more-layered coating;
wherein the coating film has a hydrophilic colored coating on its outermost surface,
the hydrophilic colored coating contains an acrylic-modified epoxy resin (A), a melamine resin (B), a perfluoroalkyl group-containing alcohol resin (C), and a pigment (D),
the content of the pigment (D) in the hydrophilic colored coating is 1 to 80 mg/m2,
the water-contact angle of the hydrophilic colored coating is 20° or less, and
the elution ratio of the hydrophilic colored coating into water is 1 mass% or less after an immersion test in which the heat-exchanger fin material is immersed in running water with a flow rate of 5L/hour for 24 hours.

Another aspect of the present invention is a heat exchanger including a fin composed of the aforementioned heat-exchanger fin material.

EFFECTS OF THE INVENTION

In the heat-exchanger fin material, the coating film has, on its outermost surface, the hydrophilic colored coating containing an acrylic-modified epoxy resin, a melamine resin, a perfluoroalkyl group-containing alcohol resin, and a pigment. And, the content of the pigment is 1 to 80 $mg/m^2$. The hydrophilic colored coating exhibits excellent hydrophilicity because it contains the perfluoroalkyl group-containing alcohol resin, and exerts high designability with rich hue because it contains a predetermined amount of the pigment. Further, the hydrophilic colored coating contains a melamine resin together with an acrylic-modified epoxy resin, and thus the acrylic-modified epoxy resin and the melamine resin can form a crosslinking structure, by which constituent components in the hydrophilic colored coating, such as each resin component and the pigment remain as it is. Consequently, the hydrophilic resins such as the perfluoroalkyl group-containing alcohol resin, and the like becomes to hardly elute into water, for example, condensed water along with the pigment. Specifically, in the heat-exchanger fin material, the elution amount of the hydrophilic colored coating into water is low, and thus the fin material is excellent in color fading resistance. Further, the hydrophilic colored coating thus configured can exert the excellent hydrophilicity and color fading resistance as mentioned above regardless of the kind of the pigment. Still further, the hydrophilic colored coating can also be concluded to be excellent in water resistance from the viewpoint of capability of restraining the elution into water.
Further, the hydrophilic colored coating is not necessarily required to contain an inorganic compound with high hardness such as an alkali metal silicate, alumina, and so on. Thus, for example, mold abrasion during molding and occurrence of cracks in the fin material can be prevented. That is, reduction of the moldability in the fin material can be prevented. Still further, the hydrophilic colored coating can be obtained by a single coating step, and does not require, for example, repeated coating with two or more kinds of coating materials to form a hydrophilic layer and a colored layer separately.
The heat exchanger is provided with the fin formed of the heat-exchanger fin material. Thus, the fin can exert excellent hydrophilicity, designability, and color fading resistance.

BRIEF DESCRIPTION OF THE DRAWINGS

FIG. 1 is a cross-sectional view of a fin material according to Working Example 1.
FIG.2 is a cross-sectional view of a fin material according to Modification.
FIG.3 is a schematic view of a heat exchanger according to Working Example 2.

MODES FOR CARRYING OUT THE INVENTION

Embodiments of a fin material and a heat exchanger using the same will now be explained.
The fin material includes a substrate composed of aluminum. In the present specification, "aluminum" is a general term for a metal or an alloy in which aluminum is the principal constituent and is a general concept that includes pure aluminum and aluminum alloys.
A coating film formed on a substrate includes a one-layered or two or more-layered coating. A coating film formed by a single application of one coating material includes one layer, and a coating film formed by multiple applications of a coating material the composition of which is the same for each application also includes one layer.
The coating film has, on its outermost surface, a hydrophilic colored coating, and the hydrophilic colored coating contains an acrylic-modified epoxy resin (A), a melamine resin (B), a perfluoroalkyl group-containing alcohol resin (C), and a pigment (D).

The acrylic-modified epoxy resin (A) contributes to improvement in color fading resistance, and the like, of the hydrophilic colored coating. The acrylic-modified epoxy resin (A) can be obtained by reaction of, for example, a bisphenol type epoxy resin (A1) and an acrylic resin (A2) having a hydroxyl group or a carboxyl group. As the bisphenol type epoxy resin (A1), a bisphenol A type epoxy resin, a bisphenol F type epoxy resin, a bisphenol S type epoxy resin, and the like are exemplified, among which the bisphenol A type epoxy resin is preferred. As the acrylic resin (A2), for example, an acrylic polymer containing acrylic acid or methacrylic acid as a monomer component, that is, an acrylic polymer having a structural unit derived from acrylic acid or methacrylic acid can be exemplified. Further, as the acrylic resin (A2), for example, an acrylic copolymer containing acrylic acid and methacrylic acid as a monomer component, that is, a copolymer having a structural unit derived from acrylic acid and a structural unit derived from methacrylic acid can be exemplified. Furthermore, the acrylic copolymer may further contain a polymerizable unsaturated carboxylic acid such as maleic acid, phthalic acid and the like as a monomer component. That is, the acrylic copolymer may have a structural unit derived from a polymerizable unsaturated carboxylic acid other than acrylic acid and methacrylic acid, specifically the acrylic copolymer may have a structural unit derived from maleic acid, a structural unit derived from phthalic acid, or structural units derived from maleic acid and phthalic acid.

The hydrophilic colored coating preferably contains 45 to 65 parts by mass of the acrylic modified epoxy resin (A) with respect to 100 parts by mass of resin components in the hydrophilic colored coating. In this case, it becomes possible to improve the hydrophilicity and color fading resistance of the hydrophilic colored coating with good balance. From the viewpoint of improving the hydrophilicity and color fading resistance with good balance, the hydrophilic colored coating more preferably contains 50 to 60 parts by mass of the acrylic modified epoxy resin (A) with respect to 100 parts by mass of resin components in the hydrophilic colored coating. It is noted that the content of the acrylic modified epoxy resin (A) is defined in terms of solid content, and the contents of the melamine resin (B), the perfluoroalkyl group-containing alcohol resin (C), and the pigment (D) are also defined in terms of solid content.

The melamine resin (B) contributes to improvement in, for example, color fading resistance of the hydrophilic colored coating. Specifically, in the hydrophilic colored coating, a crosslinking structure of the melamine resin (B) and the acrylic-modified epoxy resin (A) is formed, and thus the hydrophilic colored coating containing the pigment becomes to hardly elute into water. Such a crosslinking structure can be formed by heating.

The hydrophilic colored coating preferably contains 2 to 13 parts by mass of the melamine resin (B) with respect to 100 parts by mass of resin components in the hydrophilic colored coating. In this case, the crosslinking structure is formed satisfactorily, so that the color fading resistance can be improved while preventing deterioration of the hydrophilicity and moldability of the hydrophilic colored coating. From the similar viewpoint, the ratio of the content of the melamine resin (B) to the content of the acrylic-modified epoxy resin (A) is 0.03 to 0.25 in terms of mass ratio. From the viewpoint of further improving the color fading resistance while further preventing the deterioration of the hydrophilicity and moldability, the hydrophilic colored coating contains more preferably 3 to 8 parts by mass of the melamine resin (B) with respect to 100 parts by mass of resin components in the hydrophilic colored coating. From the similar viewpoint, the ratio of the content of the melamine resin (B) to the content of the acrylic-modified epoxy resin (A) is more preferably 1/12 to 1/10 in terms of mass ratio.

The perfluoroalkyl group-containing alcohol resin (C) contributes to improvement in, for example, hydrophilicity of the hydrophilic colored coating. The perfluoroalkyl group-containing alcohol resin (C) can be obtained by reacting, for example, a fluorine-based compound (C1) having a perfluoroalkyl group with a polymer (C2) having a hydroxyl group. The perfluoroalkyl group-containing alcohol resin (C) preferably has at least one of the following structural units represented by Formula (I) and Formula (II), more preferably has a repeating structure unit of Formula (I) or Formula (II).

[Chemical Formula 1]

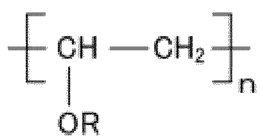

. . . (I)

[Chemical Formula 2]

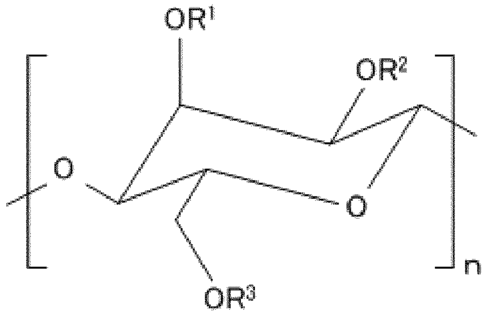

... (II)

"n" in Formulae (I) and (II) is an arbitrary natural number that is appropriately determined according to, for example, the molecular weight of each of available resins. "R" in Formula (I) has at least a group represented by Formula (III) as expressed below, and may be partly replaced with H in a polymer having a structural unit represented by Formula (I). Each of "$R^1$" to "$R^3$" in Formula (II) is a group to be independently represented by H or Formula (III), and at least one of "$R^1$" to "$R^3$" is a group to be represented by Formula (III). Moreover, at least one of "$R^1$" to "$R^3$" is preferably H. Each of j and k in Formula (III) is an independently arbitrary natural number, "j" is normally 1 to 8 and preferably 2 to 6, and "k" is normally 1 to 20 and preferably 6 to 16.

[Chemical Formula 3]

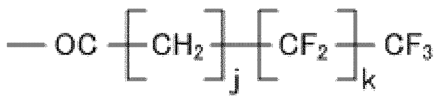

... (III)

The hydrophilic colored coating contains 30 to 50 parts by mass of the perfluoroalkyl group-containing alcohol resin (C) with respect to 100 parts by mass of resin components in the hydrophilic colored coating. In this case, the hydrophilicity can be improved while preventing reduction of the color fading resistance. From the similar viewpoint, the ratio of the content of the perfluoroalkyl group-containing alcohol resin (C) to the content of the acrylic-modified epoxy resin (A) is preferably 5/14 to 11/8 in terms of mass ratio. Further, from the similar viewpoint, the ratio of the content of the perfluoroalkyl group-containing alcohol resin (C) to the content of the melamine resin (B) is preferably 3/1 to 10/1 in terms of mass ratio.

From the viewpoint of capability of further improving the hydrophilicity while further preventing reduction of the color fading resistance, the hydrophilic colored coating contains more preferably 35 to 45 parts by mass of the perfluoroalkyl group-containing alcohol resin (C) with respect to 100 parts by mass of resin components in the hydrophilic colored coating. From the similar viewpoint, the ratio of the content of the perfluoroalkyl group-containing alcohol resin (C) to the content of the acrylic-modified epoxy resin (A) is more preferably 7/12 to 9/10 in terms of mass ratio. Further, from the similar viewpoint, the ratio of the content of the perfluoroalkyl group-containing alcohol resin (C) to the content of the melamine resin (B) is more preferably 7/1 to 9/1 in terms of mass ratio.

The hydrophilic colored coating may contain any other resin component than the acrylic-modified epoxy resin (A), the melamine resin (B), and the perfluoroalkyl group-containing alcohol resin (C). The content of other resin component is preferably 10 parts by mass or less with respect to 100 parts by mass in total of the acrylic-modified epoxy resin (A), the melamine resin (B), and the perfluoroalkyl group-containing alcohol resin (C), is more preferably 5 parts by mass or less, and furthermore preferably 1 part by mass or less. It is particularly preferable that the resin components in the hydrophilic colored coating are essentially composed of the acrylic-modified epoxy resin (A), the melamine resin (B), and the perfluoroalkyl group-containing alcohol resin (C). Here, the phrase, "are essentially composed of' described above means that other resin component(s) except for the resin component(s) introduced into the coating material from a resin material, a pigment, a solvent and the like is (are) not contained.

The pigment (D) colors the hydrophilic colored coating and contributes the designability. The content of the pigment (D) in the hydrophilic colored coating is 1 to 80 $mg/m^2$. In case the content of the pigment (D) is less than 1 $mg/m^2$, there is a possibility that satisfactory coloring effect cannot be obtained, and the designability of the fin material may be deteriorated. On the other hand, in case of being 80 $mg/m^2$ or more, the color of the hydrophilic colored coating is darkened to high degree, so that the coloring effect is deteriorated regardless of the kind of the pigment. That is, there is a possibility that the designability of the fin material may be deteriorated also in this case. From the viewpoint of

improving the designability of the fin material, the content of the pigment (D) in the hydrophilic colored coating is preferably 5 to 60 $mg/m^2$, and more preferably 10 to 50 $mg/m^2$

As the pigment (D), materials corresponding to varieties of colors can be used. Although both of inorganic and organic pigments are applicable to the pigment (D), the organic pigments are preferred. Specifically, examples of a blue pigment include chemical compounds such as a copper phthalocyanine-type one, a copper free phthalocyanine-type one, an indanthrone-type one, and the like. Examples of a red pigment include chemical compounds such as a monoazo-type one, a condensed azo-type one, a quinacridone-type one, a perylene-type one, and the like. Examples of a yellow pigment include chemical compounds such as a monoazo-type one, a disazo-type one, a condensed azo-type one, a metal complex salt azomethine-type one, a benzimidazolone-type one, an isoindolinone-type one, a quinophthalone-type one, and the like.

The pigment (D) is, as a pigment dispersion, added to a coating material for forming the hydrophilic colored coating. To serve as a material for modifying the particle surface of the pigment (i.e. a modifier), a cationic or nonionic surfactant is preferred from the viewpoint of dispersibility in the coating material. In the case of using an anionic surfactant, modifier aggregation proceeds within a weakly acidic and neutral range of pH 5.0 to 8.0, to thereby induce pigment sedimentation, thus the dispersibility may become poor. An acrylic-based resin can be used as the modifier, however in this case, the hydrophilicity of the surface of the hydrophilic colored coating obtained after film formation may be harmed and tends to be deteriorated.

The water-contact angle of the hydrophilic colored coating is preferably 20° or less. In this case, the surface of the fin material can exhibit fully excellent hydrophilicity. The water-contact angle is more preferably 15° or less. The water-contact angle of the hydrophilic colored coating can be adjusted, for example, by adjusting the composition of the hydrophilic colored coating in such a manner as mentioned above.

The elution ratio of the hydrophilic colored coating into running water is preferably 1 mass% or less after an immersion test in which the heat-exchanger fin material is immersed in running water with a flow rate of 5L/hour for 24 hours. In this case, the elution of the hydrophilic colored coating into water can be surely and satisfactorily prevented, to thereby satisfactorily improve the color fading resistance. The elution ratio of the hydrophilic colored coating into running water can be adjusted, for example, by adjusting the composition of the hydrophilic colored coating in such a manner as mentioned above.

The color fading degree of the hydrophilic colored coating after the immersion test is preferably ($\Delta L$, $\Delta a$, $\Delta b$) = ($\pm$ 2.5, $\pm$ 1.0, $\pm$ 1.0) in a Lab color specification system. In this case, the color fading resistance can be surely and satisfactorily improved. The color fading degree of the hydrophilic colored coating can be adjusted, for example, by adjusting the composition of the hydrophilic colored coating in such a manner as mentioned above.

The thickness of the hydrophilic colored coating can be suitably adjusted, and can be set to, for example, 0.5 to 2 $\mu m$. The hydrophilic colored coating preferably contains at least one of an antibacterial agent and an antifungal agent. In this case, antibacterial activity and antifungal activity of the hydrophilic colored coating can be improved.

The coating film preferably has a corrosion resistant coating between the hydrophilic colored coating and the substrate, the corrosion resistant coating containing at least one kind of resin selected from the group consisting of acrylic-based resins, epoxy-based resins, urethane-based resins, and ester-based resins. In this case, the corrosion resistance of the fin material can be further improved. The thickness of the corrosion resistant coating can be adjusted, for example, in the range of 0.3 to 5 $\mu m$. When the thickness is excessively small, there is a possibility that the corrosion resistance cannot be fully ensured, and when the thickness is excessively large, there is a possibility that the heat transfer performance of the fin material may be deteriorated.

Between the coating film and the substrate, a pretreatment layer composed of a chemical conversion coating can be provided. In this case, adhesion between the coating film and the substrate can be enhanced. In addition, the corrosion resistance of the fin material can be improved, so that corrosion under coating to be caused when a corrosive substance such as water, salt compounds, or the like penetrates on the surface of the substrate can be inhibited to thereby prevent coating cracks and coating peelings.

As the chemical conversion coating, a coating obtained by chemical coating treatment such as chromate conversion coating including phosphoric acid chromate, chromic acid chromate, or the like, or non-chromate conversion coating using titanium phosphate, zirconium phosphate, molybdenum phosphate, zinc phosphate, zirconium oxide or the like other than a chromium compound, that is, so-called chemical conversion treatment, can be used. It is noted that the chemical conversion treatment such as the chromate conversion coating, the non-chromate conversion coating, or the like includes reactive type and coating type, and both types are available. The pretreatment layer can be formed in 100 $mg/m^2$ or less.

Fin materials are used in manufacture of the heat exchanger, for example, in the following manner. Specifically, firstly, a coil-shaped fin material is cut into predetermined dimensions to obtain a plurality of sheet-shaped fins. Then, slit processing, louver molding, and color processing are applied to the fins by a press. Then, metal tubes, which have been arranged at predetermined positions, are made to pass through the holes formed in the fins such that the fins are stackingly arranged with a predetermined interval therebetween. Thereafter, an expanding plug is inserted into each

metal tube to expand the outer diameter of the each metal tube, so that the metal tubes and the fins are brought into close contact with each other. In this way, the heat exchanger can be obtained. The heat exchanger can be used in, for example, an indoor or outdoor unit of an air conditioner.

[Working Examples]

(Working Example 1)

In the present example, fin materials (sample E1 to sample E20) pertaining to working examples of the present invention, and fin materials (sample R1 to sample R11) pertaining to comparative examples are prepared and the properties of which are evaluated. As exemplified in FIG. 1, a fin material 1 of sample E1 to sample E20 includes a substrate 2 composed of aluminum and a coating film 3 formed on the surface thereof. The coating film 3 is composed of a hydrophilic colored coating 31. Between the substrate 2 and the coating film 3, a chemical conversion coating 4 is formed. Each coating of sample R1 to sample R11 has the same layered structure as those of sample E1 to sample E20. Sample E1 to sample E20 and sample R1 to sample R11 differ in constituent components of each hydrophilic colored coating 31 as indicated in Table 1 described later. Each quantity of the components listed in Table 1 is indicated in terms of solid content.

Hereinafter, a manufacturing method of the fin material will be described. First of all, as the substrate 2, an aluminum sheet having a thickness of 0.1 mm according to JIS A 1050-H26 was prepared. The substrate 2 was subjected to a chemical conversion treatment to form on its surface a chemical conversion coating 4 of phosphoric acid chromate.

Next, a coating material having a predetermined composition (see Table 1) was applied on the chemical conversion coating 4 using a bar coater, and heated at a temperature of 225°C for ten seconds to thereby form the coating film 3 formed of the hydrophilic colored coating 31 having a film thickness of 1 $\mu$m. In this way, the fin material exemplified in FIG.1 was obtained. Each of sample E1 to sample E20 is manufactured in the same way as described above, except that the composition of the coating material for forming the hydrophilic colored coating is different. The same applies to sample R1 to sample R11.

It is noted that the following components were used as components of the hydrophilic colored coating in Table 1.
Acrylic-modified epoxy resin (A): a polyacrylic acid - bisphenol A type epoxy
Melamine resin (B): a melamine resin
Perfluoroalkyl group-containing alcohol resin (C): a complex of a polyvinyl alcohol-fluorine compound (XO - OC - $(CH_2)_4$) - $(CF_2)_{15}$ - $CF_3$ (X: H or Na)

<Pigment (D)>

(1) D-b1: Phthalocyanine blue pigment (dispersant: a nonionic surfactant)
(2) D-b2: Phthalocyanine blue pigment (dispersant: an anionic surfactant)
(3) D-b3: Phthalocyanine blue pigment (dispersant: a polyacrylic acid-based resin)
(4) D-y1: Fast yellow pigment (dispersant: a nonionic surfactant)
(5) D- r1: Toluidine red pigment (dispersant: a nonionic surfactant)

[Table 1]

(Table 1)

| Sample No. | | Hydrophilic Colored Coating Film | | | | | | |
|---|---|---|---|---|---|---|---|---|
| | | Acrylic-Modified Epoxy Resin (A) (parts by mass) | Melamine Resin (B) (parts by mass) | Perfluoroalkyl Group-Containing Alcohol Resin (C) (parts by mass) | Pigment (D) | | | |
| | | | | | Kind | Content in Coating [mg/m$^2$] | Kind | Content in Coating [mg/m$^2$] |
| Sample E | 1 | 60 | 5 | 35 | D-b1 | 10 | - | - |
| | 2 | 50 | 5 | 45 | D-b1 | 10 | - | - |
| | 3 | 60 | 5 | 35 | D-b1 | 50 | - | - |
| | 4 | 60 | 5 | 35 | D-b1 | 1 | - | - |
| | 5 | 60 | 5 | 35 | D-b1 | 80 | - | - |
| | 6 | 60 | 5 | 35 | D-r1 | 10 | - | - |
| | 7 | 60 | 5 | 35 | D-r1 | 50 | - | - |
| | 8 | 55 | 5 | 40 | D-y1 | 10 | - | - |
| | 9 | 55 | 5 | 40 | D-y1 | 50 | - | - |
| | 10 | 60 | 5 | 35 | D-b1 | 10 | r1 | 40 |
| | 11 | 60 | 5 | 35 | D-b1 | 25 | r1 | 25 |
| | 12 | 60 | 5 | 35 | D-b1 | 40 | r1 | 10 |
| | 13 | 55 | 5 | 40 | D-b1 | 5 | y1 | 45 |
| | 14 | 55 | 5 | 40 | D-b1 | 10 | y1 | 40 |
| | 15 | 55 | 5 | 40 | D-b1 | 25 | y1 | 25 |
| | 16 | 55 | 5 | 40 | D-b1 | 30 | y1 | 20 |
| | 17 | 55 | 5 | 40 | D-r1 | 10 | y1 | 40 |
| | 18 | 55 | 5 | 40 | D-r1 | 25 | y1 | 25 |
| | 19 | 55 | 5 | 40 | D-r1 | 40 | y1 | 10 |
| | 20 | 60 | 5 | 35 | D-b2 | 50 | - | - |
| Sample R | 1 | 40 | 5 | 55 | D-b1 | 50 | - | - |
| | 2 | 70 | 5 | 25 | D-b1 | 50 | - | - |
| | 3 | 60 | 1 | 39 | D-b1 | 50 | - | - |
| | 4 | 50 | 15 | 25 | D-b1 | 50 | - | - |
| | 5 | 60 | 5 | 35 | D-b1 | 0.5 | - | - |
| | 6 | 60 | 5 | 35 | D-b1 | 100 | - | - |
| | 7 | 60 | 5 | 35 | D-r1 | 0.5 | - | - |
| | 8 | 60 | 5 | 35 | D-r1 | 100 | - | - |
| | 9 | 60 | 5 | 35 | D-y1 | 0.5 | - | - |
| | 10 | 60 | 5 | 35 | D-y1 | 100 | - | - |
| | 11 | 60 | 5 | 35 | D-b3 | 50 | - | - |

Next, evaluations of the hydrophilicity, water resistance, designability, color fading resistance and pigment dispersibility of the fin material of each sample were performed by the following steps. The results are shown in Table 2.

< Hydrophilicity >

The water-contact angle was measured by Half-angle Method using an automatic contact angle meter DM-701 manufactured by Kyowa Interface Science Co., Ltd. Specifically, each fin material was cut into 50 mm × 100 mm to prepare a test sheet. Next, 2 μl of pure water was dropped onto the hydrophilic colored coating of each test sheet to measure the water contact angle 30 seconds after the dropping. The results are shown in Table 2.

<Water Resistance >

Each fin material was cut into 100 mm × 100 mm to prepare a test sheet, and the weight Wo of the test sheet was measured. Subsequently, the test sheet was immersed in running water at a water temperature of 20°C with a flow rate of 5 L/hour for 24 hours (this is referred to as an immersion test). Thereafter, the test sheet was dried and the weight W1 of the test sheet was measured. The elution ratio E (%) is calculated by the following equation (α). The results are shown in Table 2. It is noted that the cases in which the elution ratio is less than 1% are indicated as "<1" in the table.

$$E = 100 \times (W_0 - W_1) / W_0 \cdots (\alpha)$$

<Designability>

The evaluation of the designability was carried out by measuring the color difference of the hydrophilic colored coating. First, each fin material was cut into 50 mm × 100 mm to prepare a test sheet. Next, using a color difference meter "CR-200" manufactured by Konica Minolta Co., Ltd., the light source was set in a Lab color specification system to measure the color tone of the surface of the hydrophilic colored coating. Here, the case where L was 75 or more and 85 or less, and either one of a and b was out of the range of ± 5.0 in the color difference (L, a, b) was determined as being "satisfactory". Further, the case where L was 60 or more and 95 or less, and either one of a and b was out of the range of ± 2.0 and within the range of ± 5.0 was determined as being "acceptable". Still further, the case where L was less than 60 and more than 95, or both of a and b were within the range of ± 2.0 was determined as being "unsatisfactory". The results are shown in Table 2.

<Color Fading Resistance>

First, each fin material was cut into 50 mm × 100 mm to prepare a test sheet. Next, using a color difference meter "CR-200" manufactured by Konica Minolta Co., Ltd., the light source was set in a Lab color specification system to measure the color tone of the surface of the hydrophilic colored coating (Operation A). Next, the test sheet was immersed in running water at a temperature of 25°C with a flow rate of 5L/hour for 24 hours, and was dried thoroughly, and thereafter the color tone of the surface of the hydrophilic colored coating was measured (operation B). The color fading resistance was evaluated by calculating the color tone difference (ΔL, Δa, Δb) in Operations A and B. The case where ΔL was ± 2.5 or less and Δa and Δb was ± 1.0 or less in the color tone difference (ΔL, Δa, Δb) was determined as being "satisfactory". Further, the case where ΔL is more than ± 2.5 and ± 5.0 or less, or where Δa and Δb are more than ± 1.0 and ± 2.0 or less was determined as being "acceptable". Still further, the case where ΔL exceeds ± 5.0, or where Δa and Δb exceed ± 2.0 was determined as being "unsatisfactory". The results are shown in Table 2.

<Pigment Dispersibility>

In order to form a hydrophilic colored coating having a composition of each sample (see Table 1), each coating material was left standing in a glass bottle container (specifically, a glass screw tube) at a temperature of 60°C for 72 hours. The precipitation state of each coating material after the standing was visually evaluated. The case where no precipitation of the pigment (specifically, colored precipitates) was found at the bottom of the container was determined as being "satisfactory". The case where precipitation of the pigment was found was determined as being "unsatisfactory". The results are shown in Table 2.

[Table 2]

(Table 2)

| Sample No. | | Properties of Coating Film | | | | | | | | | | Pigment Dispersibility |
|---|---|---|---|---|---|---|---|---|---|---|---|---|
| | | Hydrophilicity | Water Resistance | Designability (Color Difference) | | | | Color Fading Resistance | | | | |
| | | Contact Angle | Elution Ratio [mass %] | L | a | b | Determination | ⊿L | ⊿a | ⊿b | Determination | Determination |
| Sample E | 1 | 16° | <1 | 84.5 | -3.8 | -5.3 | Satisfactory | 0.2 | 0.1 | 0.1 | Satisfactory | Satisfactory |
| | 2 | 15° | <1 | 84.4 | -4.1 | -5.1 | Satisfactory | 0.3 | 0.2 | 0 | Satisfactory | Satisfactory |
| | 3 | 11° | <1 | 76.6 | -7.7 | -16.9 | Satisfactory | 0.9 | 0.1 | 0.6 | Satisfactory | Satisfactory |
| | 4 | 15° | <1 | 82.9 | -4.6 | -7.6 | Satisfactory | 0.3 | 0.1 | 0.2 | Satisfactory | Satisfactory |
| | 5 | 10° | <1 | 71.4 | -12.2 | -27.2 | Satisfactory | 2.4 | 0.4 | 0.6 | Satisfactory | Satisfactory |
| | 6 | 16° | <1 | 85.2 | 2.9 | 0.5 | Satisfactory | 0.2 | 0.2 | 0 | Satisfactory | Satisfactory |
| | 7 | 11° | <1 | 80.6 | 11.1 | -0.7 | Satisfactory | 0.6 | -0.8 | 0.3 | Satisfactory | Satisfactory |
| | 8 | 16° | <1 | 87.7 | -3.9 | 6.2 | Satisfactory | 0.9 | 0.1 | -0.4 | Satisfactory | Satisfactory |
| | 9 | 12° | <1 | 87.6 | -8.8 | 20.4 | Satisfactory | 2.3 | 0.2 | -0.7 | Satisfactory | Satisfactory |
| | 10 | 10° | <1 | 80 | -3.4 | -14.8 | Satisfactory | 0.8 | -0.4 | 0 | Satisfactory | Satisfactory |
| | 11 | 11° | <1 | 79 | 6.2 | 14.4 | Satisfactory | 0.7 | -0.3 | 0.2 | Satisfactory | Satisfactory |
| | 12 | 10° | <1 | 78 | 9.3 | -3.7 | Satisfactory | 0.6 | -0.1 | 0.3 | Satisfactory | Satisfactory |
| | 13 | 10° | <1 | 86 | -10.2 | 16.3 | Satisfactory | 1.8 | -0.1 | -0.4 | Satisfactory | Satisfactory |
| | 14 | 10° | <1 | 85 | -10.8 | 9.7 | Satisfactory | 1.4 | -0.2 | -0.2 | Satisfactory | Satisfactory |
| | 15 | 11° | <1 | 82 | -10.5 | 2.5 | Satisfactory | 1.2 | -0.2 | 0.1 | Satisfactory | Satisfactory |
| | 16 | 12° | <1 | 81 | -11.5 | -3 | Satisfactory | 1 | -0.1 | 0.1 | Satisfactory | Satisfactory |
| | 17 | 10° | <1 | 81.5 | -2.4 | 19.2 | Satisfactory | 1.9 | -0.1 | -0.4 | Satisfactory | Satisfactory |
| | 18 | 11° | <1 | 84 | 7.8 | 11.8 | Satisfactory | 1.4 | -0.2 | -0.1 | Satisfactory | Satisfactory |
| | 19 | 11° | <1 | 85.5 | 10.1 | 2.9 | Satisfactory | 0.9 | -0.4 | 0 | Satisfactory | Satisfactory |
| | 20 | 16° | <1 | 75.4 | -7.9 | -16.4 | Satisfactory | 0 | 0.2 | 0 | Satisfactory | Unsatisfactory |
| Sample R | 1 | 10° | 0.15 | 76.9 | -7.8 | -16.4 | Satisfactory | 1.2 | 0.5 | 1.2 | Unsatisfactory | Satisfactory |
| | 2 | 55° | <1 | 76.2 | -8 | -16.8 | Satisfactory | 0.5 | 0.1 | 0.3 | Satisfactory | Satisfactory |
| | 3 | 10° | 0.12 | 76.5 | -7.6 | -16.6 | Satisfactory | 1.6 | 0.7 | 1.4 | Unsatisfactory | Satisfactory |
| | 4 | 33° | <1 | 75.8 | -7.4 | -17.1 | Satisfactory | 0.6 | 0.1 | 0.3 | Satisfactory | Satisfactory |
| | 5 | 16° | <1 | 88 | -1.9 | 1.8 | Unsatisfactory | 0 | 0 | 0 | Satisfactory | Satisfactory |
| | 6 | 8° | <1 | 68 | -15.2 | -34.1 | Acceptable | 4.1 | 0.6 | 1.6 | Unsatisfactory | Satisfactory |
| | 7 | 16° | <1 | 88 | 0.1 | 0.3 | Unsatisfactory | 0 | 0 | 0 | Satisfactory | Satisfactory |
| | 8 | 7° | <1 | 71 | 19.2 | -1.3 | Acceptable | 3.8 | -1.2 | 0.4 | Unsatisfactory | Satisfactory |
| | 9 | 15° | <1 | 88 | -1.6 | -0.6 | Unsatisfactory | 0 | 0 | 0 | Satisfactory | Satisfactory |
| | 10 | 8° | <1 | 85 | -13.1 | 35.6 | Acceptable | 2.9 | 0.5 | -1.4 | Unsatisfactory | Satisfactory |
| | 11 | 37° | <1 | 76.4 | -7.8 | -16.8 | Satisfactory | 0 | 0.2 | 0 | Satisfactory | Satisfactory |

As known from Tables 1 and 2, it was confirmed the fin materials (Samples E1 to E18) pertaining to the working example are excellent in hydrophilicity, designability, and color fading resistance.

Comparison between sample E2 and sample R1 showed that sample E2 is more excellent in color fading resistance. From this result, it is revealed that the content of the acrylic-modified epoxy resin is preferably 45 parts by mass or more with respect to 100 parts by mass of the resin components in order to improve the color fading resistance.

Further, comparison between sample E1 and sample R1 showed that sample E1 is more excellent in hydrophilicity. From this result, it is revealed that the content of the acrylic-modified epoxy resin is preferably 65 parts by mass or less with respect to 100 parts by mass of the resin components in order to sufficiently enhance the hydrophilicity. In sample R2, it is considered that the hydrophilicity was deteriorated because the crosslinking reaction between the acrylic-modified epoxy resin and the hydrophilic group of the fluoropolymer was promoted. Considering the result of the comparison between sample E2 and sample R1, the ratio of the content of the perfluoroalkyl group-containing alcohol resin to the content of the acrylic-modified epoxy resin is preferably 5/14 to 11/8 in terms of mass ratio (perfluoroalkyl group-containing alcohol resin/acrylic modified epoxy resin), and more preferably 7/12 to 9/10.

Comparison between Sample E2 and Sample R3 showed that E2 is more excellent in color fading resistance. From this result, it is revealed that the content of the melamine resin is preferably 2 parts by mass or more with respect to 100 parts by mass of the resin components in order to improve the color fading resistance. As for sample R3 in which the melamine resin content is small, the coating film hardness cannot be sufficiently obtained, and the pigment may be easily eluted into water.

Comparison of samples E1, E4, and E6 with samples R5, R7, and R9 showed that samples E1, E4, and E6 are more colorful. From this result, the content of the pigment in the coating is preferably 1 $mg/m^2$ or more, and more preferably 10 $mg/m^2$ or more.

Comparison of samples E3, E5, and E7 with samples R6, R8, and R10 showed that samples E3, E5 and E7 are more excellent in color fading resistance. From this result, the amount of the pigment in the coating is preferably 80 $mg/m^2$ or less, and more preferably 50 $mg/m^2$ or less.

Comparison between sample E1 and sample R11 showed that sample E1 is more excellent in hydrophilicity. The reason can be considered as follows, that is, in the case of using a polyacrylic acid base resin as a dispersant for the pigment as in sample R11, the polyacrylic acid base resin tends to easily bleed out on the surface of the coating, and the hydrophilicity may undesirably be deteriorated accordingly. Further, comparison between sample E1 and sample E20 shows that sample E1 is more excellent in pigment dispersibility in production. This is because in the case of using an anionic surfactant as a dispersant for the pigment as in sample E20, the pigment becomes to be easily precipitated in the coating material. In this case, managing and handling of the coating material may become difficult, and productivity may be deteriorated. From such a viewpoint, as the dispersant for use in the pigment, a cationic or nonionic surfactant is preferred.

As described above, the heat-exchanger fin materials (sample E1 to sample E20) each of which includes an acrylic-modified epoxy resin, a melamine resin, a perfluoroalkyl group-containing alcohol resin, and a pigment, and of which the existing amount of the pigment is specified to 1 to 80 $mg/m^2$ are excellent in hydrophilicity, designability, and color fading resistance. Further, in the fin materials of sample E1 to sample E20, the hydrophilic colored coating is not necessarily required to contain an inorganic compound with high hardness such as an alkali metal silicate, alumina, and so on. Thus, for example, mold abrasion during molding and occurrence of cracks in the fin material can be prevented. That is, reduction of the moldability in the fin material can be prevented. Still further, in the fin materials of sample E1 to sample E20, the hydrophilic colored coating can be obtained by a single coating step, and does not require, for example, repeated coating with two or more kinds of coating materials to form a hydrophilic layer and a colored layer separately.

(Modification)

In the present example, there is exemplified a heat-exchanger fin material having a coating film composed of a hydrophilic colored coating and a corrosion resistant coating. As exemplified in FIG. 2, the fin material 1 of the present example includes the hydrophilic colored coating 31 and a corrosion resistant coating 32 as the coating film 3, and the outermost layer is formed of the hydrophilic colored coating 31. Other configurations are the same as those in Working Example 1. Specifically, the fin material 1 of the present example includes the substrate 2, the chemical conversion coating 4 formed on the substrate 2, the corrosion resistant coating 32 formed on the chemical conversion coating 4, and the hydrophilic colored coating 31 formed on the corrosion resistant coating 32. The corrosion resistance of the fin material can be further enhanced by thus forming the corrosion resistant coating 32.

(Working Example 2)

In the present example, there is exemplified a heat exchanger equipped with fins formed of the fin materials of Working Example 1. As exemplified in FIG. 3, a heat exchanger 7 is of a cross-fin tube type, and includes numerous sheet-shaped fins 8 composed of the fin material 1, and metal tubes 9 passing through these fins for transferring heat. The fins 8 are arranged in parallel with a predetermined interval therebetween. The width of each fin 8 is, for example,

25.4 mm; the height is, for example, 290 mm; the built-up pitch of the fins 8 is, for example, 1.4 mm; and the width of the entire heat exchanger 1 is, for example, 300 mm. The height direction of the fin 8 is the rolling-parallel direction of the substrate. There are two rows of the metal tube 9 in the width of the fins 8, and there are 14 stages of the metal tube 9 in the height of the fins 8. It is noted that, for the sake of convenience in the preparation of the drawing, several of the metal tubes 9 are omitted in FIG. 3. And, the metal tube 9 is a copper tube having a helical groove on its inner surface. The dimensions of the metal tube are outer diameter: 7.0 mm, bottom-wall thickness: 0.45 mm, fin height: 0.20 mm, fin vertical angle: 15.0°, and helix angle: 10.0°.

The heat exchanger 7 was prepared in the following manner. First, assembly holes (not shown), each having a fin-collar part with a height of 1 to 4 mm for inserting the metal tubes 8 therethrough and fixing such, were formed by press working on the fins 8, each formed of the fin material 1. After stacking the fins 8, the separately prepared metal tubes 7 were inserted through the interiors of the assembly holes. As the metal tubes 9, a copper tube, in which a groove was formed on its inner surface by, for example, rolling and which was then cut to a standard length and hairpin bent, was used. Next, by inserting a tube-expanding plug from one end of each metal tube 9 and widening the outer diameter of the each metal tube 9, the metal tubes 9 were secured to the fins 8. After the tube-expanding plug was removed, a U-bent tube was joined to each metal tube 9 by brazing to thereby obtain the heat exchanger 7.

By using samples E1 to E20 pertaining to Working Example 1 as the fin material 1, the heat exchanger 7 is excellent in hydrophilicity, designability, and color fading resistance of the fins 8. And, the hydrophilic colored coating 31 of the fin material 1 does not necessarily contain an inorganic compound with high hardness such as an alkali metal silicate, alumina, and so on. Thus, for example, mold abrasion during molding of the fin material 1 in manufacturing of the heat exchanger 7 and occurrence of cracks in the fin material 1 can be prevented.

## Claims

**1.** A heat-exchanger fin material comprising:

a substrate composed of aluminum; and
a coating film formed on the substrate and composed of a one-layered or two or more-layered coating;
wherein the coating film has a hydrophilic colored coating on its outermost surface,
the hydrophilic colored coating contains an acrylic-modified epoxy resin (A), a melamine resin (B), a perfluoroalkyl group-containing alcohol resin (C), and a pigment (D),
the content of the pigment (D) in the hydrophilic colored coating is 1 to 80 mg/$m^2$,
the water-contact angle of the hydrophilic colored coating is 20° or less, and
the elution ratio of the hydrophilic colored coating into running water is 1 mass% or less after an immersion test in which the heat-exchanger fin material is
immersed in running water with a flow rate of 5L/hour for 24 hours.

**2.** The heat-exchanger fin material according to claim 1, wherein the color fading degree of the hydrophilic colored coating after the immersion test is indicated as ($\Delta$L, $\Delta$a, $\Delta$b) = ($\pm$ 2.5, $\pm$ 1.0, $\pm$ 1.0) in a Lab color specification system.

**3.** The heat-exchanger fin material according to claim 1 or 2, wherein the hydrophilic colored coating contains 45 to 65 parts by mass of the acrylic modified epoxy resin (A) with respect to 100 parts by mass of resin components in the hydrophilic colored coating.

**4.** The heat-exchanger fin material according to any one of claims 1 to 3, wherein the hydrophilic colored coating contains 2 to 13 parts by mass of the melamine resin (B) with respect to 100 parts by mass of resin components in the hydrophilic colored coating.

**5.** The heat-exchanger fin material according to any one of claims 1 to 4, wherein the ratio of the content of the melamine resin (B) to the content of the acrylic-modified epoxy resin (A) in the hydrophilic colored coating is 0.03 to 0.25 in terms of mass ratio.

**6.** The heat-exchanger fin material according to any one of claims 1 to 5, wherein the hydrophilic colored coating contains 30 to 50 parts by mass of the perfluoroalkyl group-containing alcohol resin (C) with respect to 100 parts by mass of resin components in the hydrophilic colored coating.

**7.** The heat-exchanger fin material according to any one of claims 1 to 6, wherein the ratio of the content of the perfluoroalkyl group-containing alcohol resin (C) to the content of the acrylic-modified epoxy resin (A) in the hydrophilic

colored coating is 5/14 to 11/8 in terms of mass ratio.

**8.** The heat-exchanger fin material according to any one of claims 1 to 7, wherein the ratio of the content of the perfluoroalkyl group-containing alcohol resin (C) to the content of the melamine resin (B) in the hydrophilic colored coating is 3/1 to 10/1 in terms of mass ratio.

**9.** The heat-exchanger fin material according to any one of claims 1 to 8, wherein the hydrophilic colored coating further contains at least one of an antibacterial agent and an antifungal agent.

**10.** The heat-exchanger fin material according to any one of claims 1 to 9, wherein the coating film comprises a corrosion resistant coating between the hydrophilic colored coating and the substrate, the corrosion resistant coating containing at least one kind of resin selected from the group consisting of acrylic-based resins, epoxy-based resins, urethane-based resins, and ester-based resins.

**11.** A heat exchanger comprising:

a fin composed of the heat-exchanger fin material according to any one of claims 1 to 10.

FIG. 1

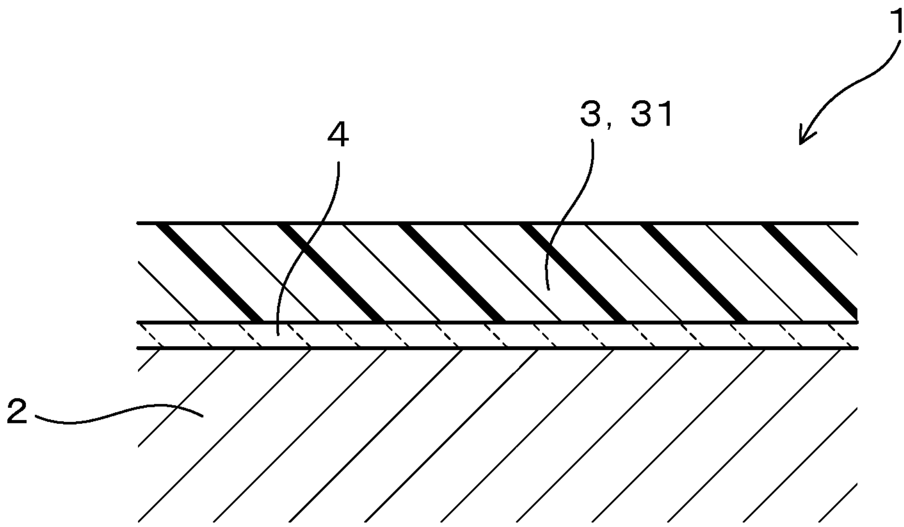


FIG. 2

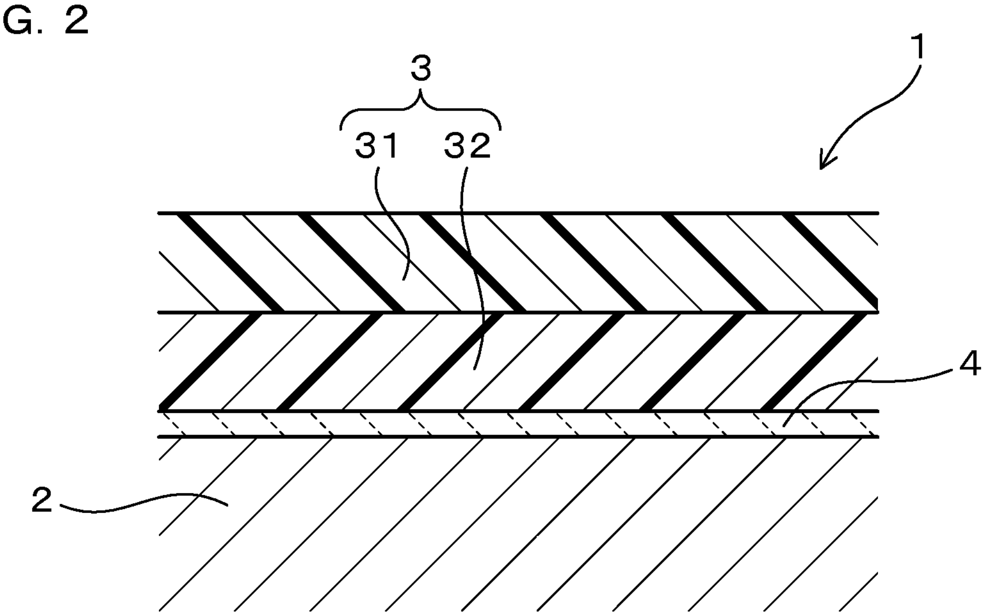

FIG. 3

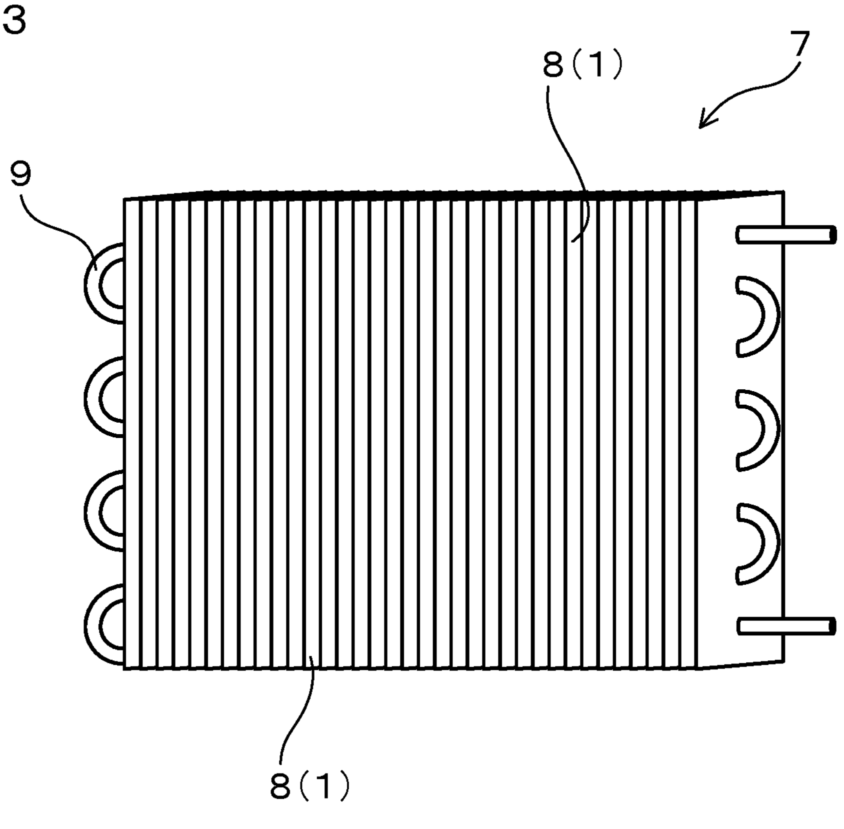

**INTERNATIONAL SEARCH REPORT**

International application No.
PCT/JP2017/012153

A. CLASSIFICATION OF SUBJECT MATTER
*F28F1/32*(2006.01)i, *F25B39/02*(2006.01)i, *F28F13/18*(2006.01)i

According to International Patent Classification (IPC) or to both national classification and IPC

B. FIELDS SEARCHED

Minimum documentation searched (classification system followed by classification symbols)
F28F1/32, F25B39/02, F28F13/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2012/157325 A1 (Kansai Paint Co., Ltd.), 22 November 2012 (22.11.2012), paragraphs [0003] to [0004], [0010] to [0098] (Family: none) | 1-5,7-11<br>6 |
| Y | JP 2006-348238 A (Furukawa-Sky Aluminum Corp.), 28 December 2006 (28.12.2006), paragraph [0023] (Family: none) | 1-5,7-11 |
| Y | JP 6-322292 A (Nippon Paint Co., Ltd.), 22 November 1994 (22.11.1994), paragraphs [0076] to [0079] & EP 620256 A2 page 10, line 54 to page 13, line 23 | 1-5,7-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 June 2017 (06.06.17)

Date of mailing of the international search report
13 June 2017 (13.06.17)

Name and mailing address of the ISA/
Japan Patent Office
3-4-3,Kasumigaseki,Chiyoda-ku,
Tokyo 100-8915,Japan

Authorized officer

Telephone No.

Form PCT/ISA/210 (second sheet) (January 2015)

**INTERNATIONAL SEARCH REPORT**

International application No.
PCT/JP2017/012153

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-190178 A (Kobe Steel, Ltd.), 26 September 2013 (26.09.2013), paragraphs [0018], [0020]; fig. 1 & WO 2013/137004 A1 & CN 104024781 A | 10-11 |
| Y | JP 2011-2146 A (Panasonic Corp.), 06 January 2011 (06.01.2011), paragraph [0020]; fig. 1 (Family: none) | 10-11 |
| A | JP 2012-237477 A (Nippon Light Metal Co., Ltd.), 06 December 2012 (06.12.2012), entire text; all drawings & US 2014/0069620 A1 & WO 2012/153571 A1 & CN 103518117 A & KR 10-2014-0033085 A | 1-11 |

Form PCT/ISA/210 (continuation of second sheet) (January 2015)

**INTERNATIONAL SEARCH REPORT**

International application No.
PCT/JP2017/012153

Claim 1 contains the wording "a flow rate of 5 L/hr". However, it is unclear what matter the "5 L" indicates.

Namely, since the wording relates to "flow rate", it is considered that the "5 L" means a length. However, it is unclear what length the "L" means. Even when looking through the description, it cannot be understood what length the "L" means.

Consequently, the invention of claim 1 is not clear.

With respect to the invention-specifying matter in claim 1 wherein "after an immersion test in which the fin material for heat exchangers is immersed for 24 hours in running water having a flow rate of 5 L/hr, the degree of dissolution of the hydrophilic colored film in the running water is 1 mass% or less", the matter was construed as nothing but meaning that the degree of dissolution of the hydrophilic colored film in running water is low, in view of the following two respects. Judgments on novelty and inventive step were made on the interpretation.

(1) The above-said invention-definition-matter is practically stated, and therefore, it is not clear what specific matter is specified or is not specified by said statement.

(2) As stated above, it is unclear what length the "L" means.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003231977 A
- JP 2006321965 A
- JP 2009214001 A